# EUROPÄISCHE PATENTSCHRIFT

(11) **EP 1 704 924 B1**
(45) Veröffentlichungstag und Bekanntmachung des Hinweises auf die Patenterteilung: **23.04.2008**
(21) Anmeldenummer: 06111359.3
(22) Anmeldetag: 17.03.2006
(51) Int. Cl.: B05B 13/04, B05B 15/12

(54) **Beschichtungsanlage und zugehöriges Verfahren**
Coating apparatus and corresponding process
Dispositif de revêtement et procédé associé

(30) Priorität: 21.03.2005 DE 102005013014
(43) Veröffentlichungstag der Anmeldung: 27.09.2006
(60) Teilanmeldung: 07022331.8
(73) Patentinhaber: Dürr Systems GmbH, 70435 Stuttgart (DE)
(72) Erfinder: Herre, Frank, 71739, Oberriexingen (DE)
(74) Vertreter: Beier, Ralph

(56) Entgegenhaltungen:
- WO-A-20/04037430
- DE-A1- 10 337 803
- FR-A- 2 405 758
- US-A- 5 042 420
- US-A1- 2005 051 085

## Beschreibung

Die Erfindung betrifft eine Beschichtungsanlage gemäß dem Oberbegriff von Anspruch 1.

Aus WO 2004/037430 A1 ist eine Beschichtungsanlage bekannt, bei der in einer Lackierzelle ein Rahmen angeordnet ist, der an seinen Längsseiten mehrere Lackierroboter trägt, wobei der gesamte Rahmen mit den Lackierrobotern durch Standbeine gegenüber dem Fundament der Lackierzelle nach oben versetzt ist. Diese nach oben versetzte Montage der Lackierroboter ist im Vergleich zu bodenmontierten Lackierrobotern wartungsärmer und weniger verschmutzungsanfällig, da das sogenannte Overspray in der Lackierzelle nach unten absinkt und deshalb bodenmontierte Lackierroboter schneller und stärker verschmutzt.

Nachteilig an dieser bekannten Beschichtungsanlage gemäß WO 2004/037430 A1 ist jedoch die Tatsache, dass zur angehobenen Montage der Lackierroboter eine zusätzliche Rahmenstruktur mit Standbeinen in der Lackierzelle angeordnet werden muss.

Darüber hinaus sind herkömmliche Lackierroboter konstruktiv darauf ausgerichtet, dass der Arbeitsraum oberhalb der Montageebene liegt, wohingegen die Beschichtungsanlage gemäß WO 2004/037430 A1 Lackierroboter erfordert, deren Arbeitsraum unterhalb ihrer Montageebene liegt.

Aus DE 103 37 803 A1 ist eine Lackieranlage zur Lackierung von Fahrzeugkarosserien bekannt, bei der ein Applikationsroboter an einem bogenförmigen Portal befestigt ist und entlang dem Portal bogen- oder ringförmig um die zu lackierende Fahrzeugkarosserie herumgeführt werden kann. Das Portal beschränkt jedoch das lichte Profil der Lackierkabine.

Aus US 2005 0051085 A1 ist eine Lackieranlage bekannt, bei der Lackierroboter in einer Seitenwand einer Lackierkabine montiert sind. Auch bei dieser Montage sind die Lackierroboter jedoch dem Overspray in der Lackierkabine ausgesetzt und neigen deshalb zur Verschmutzung.

Ferner ist aus US 5 042 420 eine Lackierkabine bekannt, deren Seitenwände leicht geneigt sind, wobei in den geneigten Seitenwänden Heizer zum trocknen der Fahrzeugkarosserie angeordnet sind.

Ferner ist zum Stand der Technik noch auf FR 2 405 758 hinzuweisen.

Der Erfindung liegt deshalb die Aufgabe zugrunde, diese bekannte Beschichtungsanlage entsprechend zu verbessern.

Diese Aufgabe wird durch die nebengeordneten Ansprüche gelöst.

Die Erfindung umfasst die allgemeine technische Lehre, den Applikationsroboter mindestens teilweise hängend zu montieren, so dass herkömmliche Lackierroboter verwendet werden können, deren Arbeitsraum bei einer stehenden Montage oberhalb der Montageebene und bei einer hängenden Montage unterhalb der Montageebene liegt.

Der im Rahmen der Erfindung verwendete Begriff einer hängenden Montage des Applikationsroboters bedeutet vorzugsweise, dass die Basis des Applikationsroboters gegenüber einer herkömmlichen stehenden Bodenmontage auf einem waagerechten Fundament um einen Winkel geneigt ist, der größer als 90°, 100° oder sogar 110° ist und im Falle einer Überkopf-Montage bis zu 180° betragen kann, wobei beliebige Zwischenwerte möglich sind.

Darüber hinaus bedeutet der Begriff einer hängenden Montage des Applikationsroboters vorzugsweise, dass der Arbeitsbereich des Applikationsroboters mehrheitlich oder sogar vollständig unterhalb der Montageebene liegt, wie bereits vorstehend angedeutet wurde. Der Arbeitsbereich des Applikationsroboters ist hierbei der räumliche Bereich innerhalb der Lackierzelle, der von dem Applikationsroboter für eine Beschichtung eines Applikationsobjekts (z.B. eine Kraftfahrzeugkarosserie) erreicht werden kann. Die Montageebene in diesem Sinne ist dagegen die Ebene bzw. die Höhe in der Lackierzelle, in der die Basis des Applikationsroboters am Fundament oder einer Tragstruktur befestigt ist.

Die hängende Montage des Applikationsroboters bietet zum einen den bereits vorstehend erwähnten Vorteil, dass der Applikationsroboter aufgrund seiner Montageposition im oberen Bereich der Lackierzelle weniger stark verschmutzt, wodurch der Aufwand für Wartung und Reinigung des Applikationsroboters verringert wird.

Zum anderen ist die erfindungsgemäße Anordnung des Applikationsroboters im oberen Bereich der Lackierzelle strömungstechnisch günstiger, was zu einer Erhöhung des Auftragswirkungsgrads und zu einer Verringerung des sogenannten Oversprays beiträgt.

Darüber hinaus ermöglicht die hängende Montage des Applikationsroboters eine Verringerung der Anzahl von Applikationsrobotern in den einzelnen Lackierzellen. So besteht bei einer hängenden Montage des Applikationsroboters die Möglichkeit, dass in einer Lackierzelle nur ein einziger Applikationsroboter angeordnet ist, der die Applikationsobjekte (z.B. Kraftfahrzeugkarosserien) aufgrund der erfindungsgemäßen Montage von allen Seiten beschichten kann. Eine derartige Verringerung der Anzahl von Applikationsrobotern in den einzelnen Lackierzellen ermöglicht eine erhebliche Senkung der Kosten (z.B. für Bauteile, Instandhaltung, Lack, Spülmittel, etc.).

Ferner bietet die erfindungsgemäße hängende Montage des Applikationsroboters den Vorteil, dass eine geringere Kabinenbreite möglich ist, wobei der Arbeitsraum besser genutzt wird.

Weiterhin ermöglicht die Erfindung vorteilhafterweise den Einsatz von Applikationsrobotern mit einer geringeren Zahl von beweglichen Achsen.

Besonders vorteilhaft ist es, wenn der Applikationsroboter in der Lackierzelle so angeordnet ist, dass sich das zu beschichtende Applikationsobjekt im Wesentlichen in der Mitte des Arbeitsbereichs des Applikationsroboters befindet und/oder vollständig innerhalb des Arbeitsbereichs des Applikationsroboters liegt.

Gemäß der Erfindung ist der Applikationsroboter in einer nach innen geneigten, schrägen Seitenwand der Lackierzelle hängend montiert. Die Neigung der Seitenwand der Lackierzelle im oberen Bereich hat sich als strömungstechnisch günstig erwiesen, wodurch der Auftragswirkungsgrad verbessert und das sogenannte Overspray verringert wird. Die Montage des Applikationsroboters in der geneigten Seitenwand der Lackierzelle bietet sich insbesondere dann an, wenn auf beiden Seiten der Lackierzelle Applikationsroboter vorgesehen sind, da die Applikationsroboter auf einer Seite dann nur die auf ihrer Seite befindlichen Bereiche des Applikationsobjekts beschichten, ohne die gegenüberliegende Seite des Applikationsobjekts erreichen zu müssen.

Die Seitenwand der Lackierzelle kann hierbei gegenüber der Senkrechten um einen Neigungswinkel geneigt sein, der beispielsweise zwischen 5° und 40° beträgt, wobei beliebige Zwischenwerte innerhalb dieses Wertebereichs möglich sind.

Die Lackierzelle hat in dieser Variante der Erfindung also einen Querschnitt, der sich nach oben hin verjüngt, was sich als strömungstechnisch günstig erwiesen hat und zu einer Erhöhung des Auftragswirkungsgrads und zu einer Verringerung des sogenannten Oversprays beiträgt.

Es ist deshalb vorgesehen, außerhalb der Lackierzelle eine Tragstruktur anzuordnen, die den Applikationsroboter trägt, während die Seitenwand der Lackierzelle nicht-tragend ist, wobei sich in der Seitenwand der Lackierzelle ein Durchbruch befindet, durch den der Applikationsroboter in die Lackierzelle hineinragt. Die Seitenwand bzw. die Decke der Lackierzelle haben hierbei also nur die Funktion, die Lackierzelle möglichst glattflächig zu begrenzen, was insbesondere bei dem sogenannten "Clean Wall Concept" wichtig ist. Die außen liegende Tragstruktur hat dagegen hierbei die alleinige Aufgabe, den Applikationsroboter zu halten. Diese Funktionstrennung ermöglicht eine optimale konstruktive Auslegung der Seitenwand bzw. der Decke der Lackierzelle einerseits und der Tragstruktur andererseits auf ihre jeweilige technische Funktion hin.

Weiterhin weist die erfindungsgemäße Beschichtungsanlage vorzugsweise einen Verfahrweg auf, entlang dem der Applikationsroboter verfahrbar ist. Dies ermöglicht vorteilhaft eine Vergrößerung des Arbeitsraums des Applikationsroboters, indem der Applikationsroboter entlang dem Verfahrweg entsprechend positioniert wird.

In einer Variante verläuft der Verfahrweg parallel zu dem Applikationsobjekt bzw. entlang einer Lackierstrasse, die durch die Beschichtungsanlage hindurch verläuft.

Hierbei ist es wünschenswert, dass die Luftströmung in dem Lackierbereich innerhalb der Lackierzelle durch den Verfahrweg möglichst wenig beeinflusst wird. Vorzugsweise ist der Verfahrweg deshalb außerhalb des Lackierbereichs angeordnet. Dies wird vorzugsweise dadurch erreicht, dass sich der Verfahrweg für den Applikationsroboter oberhalb des Lackierbereichs befindet. Bei einer Anordnung des Verfahrwegs senkrecht über dem Applikationsobjekt (z.B. einer Kraftfahrzeugkarosserie) sollte der Verfahrweg also außerhalb des Lackierbereichs liegen.

Weiterhin besteht im Rahmen der Erfindung die Möglichkeit, dass entlang dem Verfahrweg mehrere Applikationsroboter verfahrbar sind, so dass sich beispielsweise zwei Applikationsroboter denselben Verfahrweg teilen.

Darüber hinaus kann auf dem Verfahrweg zusätzlich zu dem Applikationsroboter mindestens ein Handhabungsroboter verfahrbar sein, so dass sich der Applikationsroboter und der Handhabungsroboter denselben Verfahrweg teilen. Der Handhabungsroboter kann hierbei beispielsweise dazu dienen, Türen, Motorhauben oder Kofferraumdeckel der zu beschichtenden Kraftfahrzeugkarosserien zu öffnen, um eine Beschichtung im Innenraum der Kraftfahrzeugkarosserie zu ermöglichen.

Bei einer solchen Anordnung mehrerer Roboter (Applikationsroboter und/oder Handhabungsroboter) auf einem gemeinsamen Verfahrweg kann eine Notstrategie bzw. ein Ausfallkonzept realisiert werden, um auch bei einem Ausfall eines der Roboter noch die Funktionsfähigkeit sicher zu stellen. Dies wird vorzugsweise dadurch erreicht, dass die einzelnen Roboter auf dem Verfahrweg einander wechselseitig passieren können, damit ein Ausfall einer Roboters den Bewegungsspielraum der anderen Roboter und damit deren Funktionsfähigkeit nicht unnötig einschränkt.

In einem bevorzugten Ausführungsbeispiel der Erfindung weist der Verfahrweg eine Schiene auf, die den Applikationsroboter in seitlicher Richtung bezüglich der Schiene führt und in vertikaler Richtung hält.

In einem anderen Ausführungsbeispiel der Erfindung ist der Applikationsroboter dagegen ortsfest innerhalb der Lackierzelle montiert. Dies ist insbesondere dann sinnvoll, wenn der Applikationsroboter in einer geneigten, schrägen Seitenwand der Lackierzelle hängend montiert ist, wie bereits vorstehend beschrieben wurde.

Ferner ist zu erwähnen, dass die Lackierzelle bei der erfindungsgemäßen Beschichtungsanlage vorzugsweise eine nach innen gewölbte Decke aufweist, was sich als strömungstechnisch günstig erwiesen hat und ebenfalls zu einer Erhöhung des Auftragswirkungsgrads und zu einer Verringerung des sogenannten Oversprays beiträgt.

Weiterhin ist es sinnvoll, wenn der Applikationsroboter zumindest in einer möglichen Position im Wesentlichen mittig über dem Applikationsobjekt angeordnet ist, damit der Applikationsroboter das Applikationsobjekt beidseitig beschichten kann, so dass in jeder Lackierzelle ein einziger Applikationsroboter ausreicht.

Ferner ist es vorteilhaft, wenn die Lackierzelle Seitenwände aufweist, die zumindest teilweise durchsichtig sind. Zum einen ermöglicht dies eine Sichtkontrolle des Lackierprozesses von außen. Zum anderen sind Seitenwände aus Glas elektrisch nicht-leitend, was bei einer elektrostatischen Lackierung vorteilhaft ist.

Der im Rahmen der Erfindung verwendete Begriff eines Applikationsroboters umfasst vorzugsweise mehrachsige Applikationsroboter mit beispielsweise 4, 5, 6 oder 7 Achsen, die vorzugsweise eine herkömmliche Roboterhandachse aufweisen.

Darüber hinaus kann der Applikationsroboter einen im Wesentlichen horizontal verlaufenden Tragarm aufweisen, der um eine im Wesentlichen senkrechte Schwenkachse schwenkbar ist, wobei der Applikationsroboter vorzugsweise acht bewegliche Achsen aufweist. Ein derartiger Applikationsroboter ist von der Firma Dürr Systems GmbH erhältlich und wird unter der Marke E-coRP Swing™ vertrieben.

Ferner ist die Erfindung hinsichtlich des zu applizierenden Beschichtungsmittels nicht auf Flüssig- oder Pulverlacke beschränkt, sondern auch mit anderen Beschichtungsmitteln realisierbar.

Vorzugsweise trägt der Applikationsroboter jedoch einen Zerstäuber, wie beispielsweise einen Rotationszerstäuber, der vorzugsweise eine elektrostatische Aufladung aufweisen kann.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:

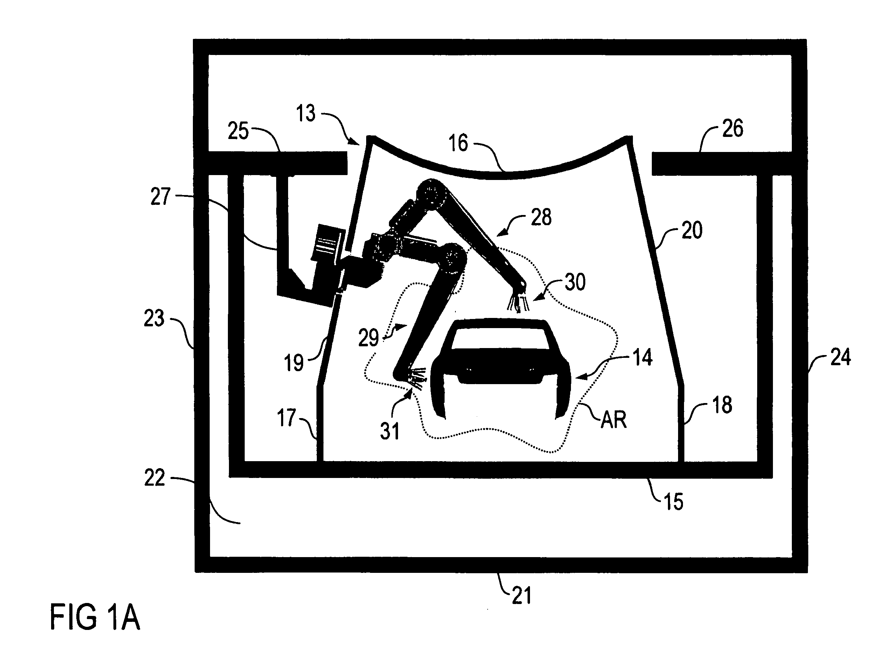

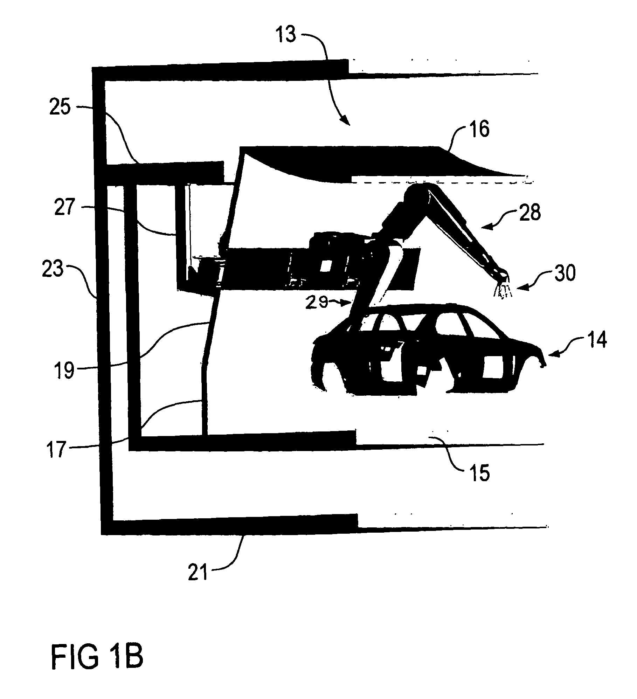

- Fig. 1A, 1B: unterschiedliche Ansichten eines Ausführungsbeispiels einer Lackierzelle in einer erfindungsgemäßen Beschichtungsanlage.

Die Figuren 1A und 1B zeigen ein Ausführungsbeispiel einer Lackierzelle 13 einer erfindungsgemäßen Beschichtungsanlage zur Lackierung von Kraftfahrzeugkarosserien, wobei in den Zeichnungen nur eine einzige Kraftfahrzeugkarosserie 14 dargestellt ist.

Die Lackierzelle 13 weist wiederum einen Boden 15 und eine Decke 16 auf, wobei die Decke 16 der Lackierzelle 13 aus strömungstechnischen Gründen nach innen in die Lackierzelle 13 hinein gewölbt ist.

Darüber hinaus wird die Lackierzelle 13 seitlich durch jeweils einen senkrecht verlaufenden Seitenwandabschnitt 17 bzw. 18 und einen nach innen geneigten Seitenwandabschnitt 19 bzw. 20 begrenzt, wobei der Neigungswinkel der Seitenwandabschnitte 19, 20 gegenüber der Senkrechten hierbei ungefähr 10° (bezogen auf einen Vollkreis mit 360°) beträgt.

Die Lackierzelle 13 weist also einen Querschnitt auf, der sich nach oben hin verjüngt, was ebenfalls strömungstechnisch günstig ist und zu einer Verbesserung des Auftragswirkungsgrads und zu einer Verringerung des sogenannten Oversprays beiträgt.

Unterhalb des Bodens 15 der Lackierzelle 13 befindet sich ein Fundament 21 der Beschichtungsanlage, wobei der Boden 15 der Lackierzelle 13 und das Fundament 21 einen Zwischenraum 22 einschließen, in dem beispielsweise Steuergeräte und Hilfsaggregate der Beschichtungsanlage untergebracht werden können.

Darüber hinaus weist die erfindungsgemäße Beschichtungsanlage massive, tragfähige Seitenwände 23, 24 auf, die jeweils einen nach innen ragenden Tragbalken 25, 26 halten.

An der Unterseite des Tragbalkens 25 ist eine Tragstruktur 27 befestigt, die einen mehrachsigen Lackierroboter 28 über Kopf hängend trägt, wobei der Lackierroboter 28 durch einen Durchbruch in dem Seitenwandabschnitt 19 in die Lackierzelle 13 hineinragt. Im Gegensatz zu den vorangegangenen Ausführungsbeispielen erfüllt der Seitenwandabschnitt 19 hierbei also keine tragende Funktion und kann deshalb vorteilhafterweise konstruktiv auf seine eigentliche Funktion hin optimiert werden, die in der möglichst glattflächigen Begrenzung der Lackierzelle 13 liegt.

Aus der perspektivischen Ansicht in Figur 1B ist weiterhin ersichtlich, dass in der Lackierzelle zusätzlich zu dem Lackierroboter 28 ein weiterer Lackierroboter 29 angeordnet ist, wobei die beiden Lackierroboter 28, 29 jeweils einen Rotationszerstäuber 30 bzw. 31 mit einer elektrostatischen Au-βenaufladung führen.

Auf der den beiden Lackierrobotern 28, 29 gegenüberliegenden Seite der Lackierzelle 13 können an dem Tragbalken 26 zusätzlich ein oder mehrere Handhabungsroboter (z.B. Haubenöffner, Türöffner) angeordnet werden, was hier jedoch zur Vereinfachung nicht dargestellt ist.

Auch bei diesem Ausführungsbeispiel ist die hängende Montage der beiden Lackierroboter 28, 29 im oberen Bereich der Lackierzelle 13 strömungstechnisch günstig, was zu einer Erhöhung des Auftragswirkungsgrads und zu einer entsprechenden Verringerung des sogenannten Oversprays beiträgt und darüber hinaus die Verschmutzung der Lackierroboter 28, 29 durch Absinken des Oversprays vermindert.

Schließlich ist aus Figur 1A wieder die Kontur des Arbeitsraums AR der Lackierroboter 28, 29 ersichtlich, wobei die zu beschichtende Kraftfahrzeugkarosserie 14 hierbei ebenfalls vollständig innerhalb des Arbeitsraums AR liegt. Darüber hinaus liegt der Arbeitsraum AR hierbei nahezu vollständig unterhalb der Montageebene.

## Patentansprüche

1. Beschichtungsanlage mit einem mehrachsigen Applikationsroboter (28, 29) zur Applikation eines Beschichtungsmittels auf ein Applikationsobjekt (14) und einer mindestens teilweise hängenden Montage des Applikationsroboters (28, 29),
**dadurch gekennzeichnet,**
**dass** der Applikationsroboter (28, 29) in einer nach innen geneigten, schrägen Seitenwand (19) einer Lackierzelle (13) hängend montiert ist, wobei außerhalb der Lackierzelle (13) eine Tragstruktur (21, 23, 25, 27) angeordnet ist, die den Applikationsroboter (28, 29) trägt, während die Seitenwand (19) der Lackierzelle (13) nicht-tragend ist, wobei sich in der Seitenwand (19) der Lackierzelle (13) ein Durchbruch befindet, durch den der Applikationsroboter (28, 29) in die Lackierzelle (13) hineinragt.

2. Beschichtungsanlage nach Anspruch 1, **gekennzeichnet durch** mindestens eine Lackierzelle, in der nur ein einziger Applikationsroboter angeordnet ist.

3. Beschichtungsanlage nach Anspruch 2, **dadurch gekennzeichnet, dass** gegenüber liegende Seiten des Applikationsobjekts von dem Applikationsroboter für eine Applikation erreichbar sind.

4. Beschichtungsanlage nach einem der vorhergehenden Ansprüche, **gekennzeichnet durch** mindestens einen Verfahrweg, entlang dem der Applikationsroboter verfahrbar ist.

5. Beschichtungsanlage nach Anspruch 4, **dadurch gekennzeichnet, dass** der Verfahrweg parallel zu dem Applikationsobjekt verläuft.

6. Beschichtungsanlage nach einem der Ansprüche 4 bis 5, **gekennzeichnet durch** einen Lackierbereich, in dem das Beschichtungsmittel appliziert wird, wobei der Verfahrweg au-βerhalb des Lackierbereichs angeordnet ist.

7. Beschichtungsanlage nach Anspruch 68, **dadurch gekennzeichnet, dass** der Verfahrweg oberhalb des Lackierbereichs angeordnet ist.

8. Beschichtungsanlage nach einem der Ansprüche 4 bis 7, **dadurch gekennzeichnet, dass** der Verfahrweg eine Schiene aufweist, die den Applikationsroboter (28, 29) führt.

9. Beschichtungsanlage nach einem der Ansprüche 1 bis 3, **dadurch gekennzeichnet, dass** der Applikationsroboter (28, 29) ortsfest montiert ist.

10. Beschichtungsanlage nach einem der vorhergehenden Ansprüche, **gekennzeichnet durch** eine Lackierzelle (13) mit einem Querschnitt, der sich nach oben hin verjüngt.

11. Beschichtungsanlage nach einem der vorhergehenden Ansprüche, **gekennzeichnet durch** eine Lackierzelle (13) mit einer nach innen gewölbten Decke (16).

12. Beschichtungsanlage nach einem der vorhergehenden Ansprüche, **gekennzeichnet durch** eine Lackierzelle (1) mit Seitenwänden, die zumindest teilweise durchsichtig sind.

## Claims

1. Coating installation with a multi-axial application robot (28, 29) for the application of a coating medium onto an object (14), wherein the application robot (28, 29) is installed so that it is partially suspended, **characterised in that** the application robot (28, 29) is installed so that it is suspended in an inwardly inclined oblique side wall (19) of a painting booth (13), wherein a load-bearing structure (21, 23, 25, 27) which supports the application robot (28, 29) is disposed outside the painting booth (13), whilst the side wall (19) of the of the painting booth (13) is not load-bearing, and wherein an opening through which the application robot (28, 29) protrudes into the painting booth (13) is located in the side wall (19) of the painting booth (13).

2. Coating installation as claimed in Claim 1, **characterised by** at least one painting booth in which only one application robot is disposed.

3. Coating installation as claimed in Claim 2, **characterised in that** opposing sides of the application object can be reached by the application robot for application purposes.

4. Coating installation as claimed in any one of the preceding claims, **characterised by** at least one displacement path along which the application robot can be moved.

5. Coating installation as claimed in Claim 4, **characterised in that** the displacement extends parallel to the application object.

6. Coating installation as claimed in any one of Claims 4 to 5, **characterised by** a painting area in which the coating medium is applied, wherein the displacement path is disposed outside the painting area.

7. Coating installation as claimed in Claim 6, **characterised in that** the displacement path is disposed above the painting area.

8. Coating installation as claimed in any one of Claims 4 to 7, **characterised in that** the displacement path has a track which guides the application robot (28, 29).

9. Coating installation as claimed in any one of Claims 1 to 3, **characterised in that** the application robot (28, 29) is installed in a fixed location.

10. Coating installation as claimed in any one of the preceding claims, **characterised by** a painting booth (13) with a cross-section which tapers upwards.

11. Coating installation as claimed in any one of the preceding claims, **characterised by** a painting booth (13) with an inwardly curved ceiling (16).

12. Coating installation as claimed in any one of the preceding claims, **characterised by** a painting booth (13) with side walls which are at least partially transparent.

## Revendications

1. Installation de revêtement comprenant un robot d'application à plusieurs axes (28, 29) pour l'application d'un agent de revêtement sur un objet à revêtir (14), et un montage au moins partiellement suspendu du robot d'application (28, 29),
**caractérisée**
**en ce que** le robot d'application (28, 29) est monté en suspension sur une paroi latérale (19) oblique, inclinée vers l'intérieur d'une cabine de peinture (13), une structure porteuse (21, 23, 25, 27) supportant le robot d'application (28, 29) étant disposée à l'extérieur de la cabine de peinture (13), alors que la paroi latérale (19) de la cabine de peinture (13) est non porteuse, une traversée étant ménagée dans la paroi latérale (19) de la cabine de peinture (13), par laquelle le robot d'application (28, 29) rentre dans la cabine de peinture (13).

2. Installation de revêtement selon la revendication 1, **caractérisée par** au moins une cabine de peinture où un seul robot d'application est présent.

3. Installation de revêtement selon la revendication 2, **caractérisée en ce que** des côtés opposés de l'objet à revêtir peuvent être atteints par le robot d'application pour une application.

4. Installation de revêtement selon l'une des revendications précédentes, **caractérisée par** au moins un chemin de déplacement sur lequel le robot d'application est déplaçable.

5. Installation de revêtement selon la revendication 4, **caractérisée en ce que** le chemin de déplacement s'étend parallèlement à l'objet à revêtir.

6. Installation de revêtement selon l'une des revendications 4 à 5, **caractérisée par** une zone de peinture où l'agent de revêtement est appliqué, le chemin de déplacement étant extérieur à la zone de peinture.

7. Installation de revêtement selon la revendication 6, **caractérisée en ce que** le chemin de déplacement est disposé au-dessus de la zone de peinture.

8. Installation de revêtement selon l'une des revendications 4 à 7, **caractérisée en ce que** le chemin de déplacement présente un rail guidant le robot d'application (28, 29).

9. Installation de revêtement selon l'une des revendications 1 à 3, **caractérisée en ce que** le robot d'application (28, 29) est monté à un emplacement fixe.

10. Installation de revêtement selon l'une des revendications précédentes, **caractérisée par** une cabine de peinture (13) dont la section transversale diminue de bas en haut.

11. Installation de revêtement selon l'une des revendications précédentes, **caractérisée par** une cabine de peinture (13) avec un plafond (16) bombé vers l'intérieur.

12. Installation de revêtement selon l'une des revendications précédentes, **caractérisée par** une cabine de peinture (13) avec des parois latérales au moins partiellement transparentes.
